# EUROPEAN PATENT APPLICATION

(11) **EP 3 327 197 A1**
(43) Date of publication of application: **30.05.2018**
(21) Application number: 17203537.0
(22) Date of filing: 24.11.2017
(51) Int. Cl.: E01C 1/00, E01C 7/08, E01C 7/32, E01C 7/35, E01C 11/00, C04B 111/00, C04B 111/20, C04B 14/30, C04B 20/10, C04B 26/26

(54) **ROAD SURFACING COMPOSITION, ITS USE, AND METHOD FOR MAINTAINING, REPAIRING AND/OR CONSTRUCTING AN ASPHALT ROAD SURFACE**

(30) Priority: 24.11.2016 NL 2017867
(71) Applicant: Zijlstra, Piet, 9351 NP Leek (NL); Oosterhof Holman Infra B.V., 9843 HA Grijpskerk (NL)
(72) Inventor: Zijlstra, Piet, 9351 NP Leek (NL)
(74) Representative: V.O.

(57) **Abstract**

The application relates to road construction, in particular to a road surfacing composition which has favorable environmental as well as civil engineering and optical properties, to its use and to a method for maintaining, repairing and/or constructing an asphalt road surface. The invention provides a road surfacing composition comprising the components (i) 30-45vol% of olivine; (ii) 20-35vol% of supported photocatalyst which can convert NOx into nitrate; and (iii) 30-40vol% of light reflective road metal, based on the sum of the parts by volume of components (i), (ii) and (iii) in the composition, with the sum of the parts by volume being 100.

## Description

The invention relates to road construction. More particularly, the invention relates to new road surfacing compositions which have favorable environmental as well as civil engineering and optical properties, and methods and applications comprising such road surfacing compositions.

The Climate Convention (or UNFCCC, United Nations Framework Convention on Climate Change) is a so-called framework convention which was concluded in 1992 under the aegis of the United Nations and signed during the Earth Summit in Rio de Janeiro. Purpose of the convention is to reduce the emissions of greenhouse gases and thereby prevent undesirable consequences of climate change. The climate treaty came into force in 1994.

An important point of the convention is that the average temperature on earth should not rise by more than two degrees Celsius. With attention to climate increasing, mobility and traffic, too, are required to contribute. This means *inter alia* environmentally friendlier cars, better public transport, less emission from industry, motor traffic and consumer, but also less public lighting.

Public lighting is more and more being replaced with LED lighting, whereby the norms for vertical illuminance are hardly, if at all, attained. The authorities are seeking to economize on energy and maintenance. In light engineering terms, requirements may be complied with, for example, by application of road surface reflection.

At various locations in the Netherlands, the air quality norms are exceeded. Authorities, businesses and research institutions are investigating possibilities of pushing back the concentrations of nitrogen dioxide (NO₂) and fine dust (PM10).

These aspects have led to a great demand within road construction for developments and innovations in the field of construction and maintenance of road surfaces. In particular, a great need has arisen for products and processes, for example for maintenance on roads, that have one or more environmental pluses.

An object of the present invention is to provide a road surfacing composition with which different desired 'tasks' can be brought together in one road surface. These different tasks include, *inter alia*, improving CO₂ reduction, dealing with fine dust issues, light pollution, energy saving, and green management. In particular, the invention envisages combining this combination of tasks with the ever-applying civil engineering and safety aspects, such as skid resistance, life span, lighting-engineering reflection properties (whether or not in combination with public lighting), and affinity of components for bitumen or other adhesive layers.

Surprisingly, it has been found that these objects can be achieved with a specific mixture comprising three essential components, namely, (i) olivine; (ii) a supported photocatalyst which can convert NOx into nitrate; and (iii) a light reflective road metal. After extensive tests, an optimum mixing ratio between the components has been found, whereby the mixture contains about 30-40% of component (i), about 25-35% of component (ii), and about 30-40% of component (iii), based on the sum of the parts by volume of components (i), (ii) and (iii). This mixture, if added to a base rock having a relatively high polished stone value and low crushing value as a carrier, provides a novel road surfacing composition having unique properties.

The invention accordingly relates to a road surfacing composition comprising the components
(i) 30-45vol% of olivine;
(ii) 20-35vol% of a supported photocatalyst which can convert NOx into nitrate;
(iii) 30-40vol% of a light reflective road metal;
based on the sum of the parts by volume of components (i), (ii) and (iii) in the composition, and with the sum of the parts by volume being 100.

Component (i) of a road surfacing composition according to the invention is olivine. The mineral olivine is a nesosilicate having as chemical formula (Mg, Fe)₂SiO₄, with the end-members between magnesium and iron being formed by the mineral series of forsterite (rich in Mg) and fayalite (rich in Fe). Olivine is a mineral that occurs in large amounts on earth and that reacts relatively fast to CO₂ in the atmosphere.
One-fifth part of the CO₂ emission in the Netherlands is caused by traffic. In 166 municipalities, traffic is the largest source of CO₂ emission. However, in many municipalities the link between climate targets and traffic policy is lacking. To achieve local and national climate targets it is necessary to make that link. In addition, by reduction in public lighting, less energy can suffice, resulting in lower CO₂ emission.

If olivine comes into contact with moisture, it extracts CO₂ from such moisture and converts the greenhouse gas into innocuous bicarbonate. In effect, it is a chemical reaction between an acid (CO₂ = carbonic acid) and an alkaline rock. This reaction occurs along the surface of the stone.

The rainwater falling on the road is slightly acidic due to the CO₂. This acidic water reacts with the olivine in the road surfacing composition, as a result of which the CO₂ is neutralized.

The natural weathering of olivine is about 1 µm a year, it being expected that this proceeds faster by a factor of 50 due to the influence of the cars in the stretch of road to be built. The worn-off fine dust particles have relatively much surface area, so that they react much faster with CO₂ than the material applied. A second advantage is that the worn-off fine dust will present fewer problems with fine dust than the fine dust of conventionally applied materials in roads. Another additional advantage is that the released elements (magnesium, silica, etc.) can serve as fertilizing agent for plants, which can thereby fix additional CO₂. Mg₂SiO₄ + 4 CO₂ + 4 H₂O → 2 Mg²⁺ + 4 HCO₃⁻ + H₄SiO₄.

The olivine is present in an amount of 30-45vol%, preferably 30-40 vol%, 35-45 vol% or 30-35vol%. The present inventors have found that olivine that originates from dunite is eminently suitable as a CO₂-binding mineral in a road surfacing composition. Dunite is a type of peridotite, that is, an ultramafic plutonic rock. Dunite consists mainly (by more than 90%) of the mineral olivine. It can contain minor amounts of orthopyroxene (enstatite), clinopyroxene (diopside), garnet (pyrope) or spinel.

Dunite, unlike quartz, is an approved jetting agent because it is not crystalline. From a health perspective, it may be stated that the fine dust arising from dunite wear gives fewer problems, and possibly is also present more briefly, than the fine dust of the quartz-like minerals that are normally used in surface and wearing layers. Thus, the environmental benefit, which includes CO₂ fixing, can also reside in pushing back the fine dust issue.

The present inventors performed investigations with different dunite-like materials as regards the civil engineering properties such as skid resistance and crushing. In doing so, surprisingly, an olivine has been found having a Mohs' value hardness of 6.5 to 7.0, with an s.w. of approximately 3.3, which lends itself particularly well for use in a road surface. In an embodiment, the invention accordingly provides a road surfacing composition in which the olivine has a hardness of 6.5-7 on Mohs' scale, and a specific weight of 3-3.5 kg/m3.

Component (ii) of a road surfacing composition according to the invention is a supported photocatalyst which (in combination with sunlight) can convert NOx into nitrate, a harmless water-soluble salt. Such catalysts are known per se. Through the sunlight, so-called free radicals are formed which can convert NOx molecules, but also other harmful substances (sulfur dioxide, hydrocarbons such as solvents and kerosene), into harmless substances. Having regard to the fact that so many countries have not reduced their NOx emission enough, a road surfacing composition according to the invention can make a great contribution, on both provincial and municipal roads, towards reducing the NOx emission. The photocatalyst is present in the composition in a relative amount of 20-35vol%, for example 30-35 vol%, 20-30vol%, or 25-35vol%. Use of the photocatalyst in the mixture provides the photocatalytic effect and is thereby air purifying (for both the NOx, the SOx, the benzene compounds and the petrol and diesel residues).

Also, a self-cleaning action proceeds from the catalyst, so that the light reflective component is better visible.

The photocatalyst may, for application in inner city areas (where it is actually needed most), be added in the mixture in a percentage of at most 35%, and for application outside the urban area in a percentage from 20 or 25%, depending on the circumstances.

Preferably, the road surfacing composition contains a photocatalyst which is based on TiO₂. Particularly suitable photocatalysts comprise a mineral grain which is coated with anatase TiO₂. Such catalysts are commercially available, for example under the name of *Anataas Titaanwit* from Scholz-Benelux.

Component (iii) is a light reflective road metal, which is present in an amount of 30-40 vol%, for example, 30-35 vol%, or 35-40vol%, based on the sum of the parts by volume of components (i), (ii) and (iii). Traffic safety depends, among other factors, on the clarity of road arrangement, visibility of road users on the road and the condition of the road surface. Especially in poor visibility conditions or in darkness, the extent of visibility of the road user with respect to the road surface is of (vital) importance, whether or not in combination with public lighting. Reflective road surfaces, if specified well and based on the correct starting points, offer fine alternatives to public lighting.

Preferably, the light reflective road metal in a road surfacing composition according to the present invention has a hardness of at least 7 on Mohs' scale, and a specific weight in the range of about 1000 - 1200 kg/m3, preferably about 1100 kg/m3. Very good results can be obtained with a light reflective road metal comprising calcined flint. Such road metals are commercially available, for example under the name of *Luxovit* and *Granusil* from Luxol (DK) and Silmer (FR), respectively.

The light reflective component (iii) can also be a natural light road metal, optionally in combination with a light reflective road metal comprising calcined flint.

By measuring the light reflection, the skid resistance, the affinity for bitumen, deformation, and influence on plants on the shoulders, the inventors have come to the insight that the presence of about 30-45% of component (i), about 20-35% of component (ii), and about 30-40% of component (iii), based on the sum of the parts by volume of components (i), (ii) and (iii) in the composition, is essential for a sufficient effect of the road surface reflection component, NOx capture and the CO₂ binding.

Both the crushing value and the skid resistance of olivine necessitate a proper combination in the mixture to comply with the civil engineering requirements set in respect of the road surface. More particularly, in the above-mentioned mutual proportion of the components, the skid resistance and crushing of the mixture are sufficiently balanced if it is used in combination with a base rock having a high polished stone value (PSV value ≥ 58) and a resistance to crushing (LA value) of ≤ 20. In an embodiment, the proportions by volume of the respective components are 30% - 30% - 40%, or 40% - 25% - 35%, 35%-35%-30%, or 45%-20%-35%.

Any deviation outside the bandwidth will result in less effect of one of the components and/or non-compliance with the civil engineering requirements as established in the Standard RAW 2015.
Preferably, a road surfacing composition according to the present invention is used with a "carrier" for components (i), (ii) and (iii), which carrier comprises a road metal (also: base rock) that has a polished stone value of at least 58 (PSV value ≥ 58) and a resistance to crushing (LA value) of ≤ 20. Road metal is broken rock. Due to the rock (mostly gravel) being broken, it has no round surface, so that the stones do not slip away so easily. In consequence, there is more mutual coherence. Accordingly, the invention also provides the use of a composition according to the invention, in combination with a base road metal having a polished stone value of at least 58 (PSV value ≥ 58) and a resistance to crushing (LA value) of ≤ 20. Preferably, the PSV value is ≥ 60, more preferably ≥ 62.

The "carrier" road metal is preferably of natural origin and, for example, comprises 100% of broken material (mineral). This means that road metal must not exhibit any round surface areas. Within the sieve analysis, the content of fine aggregate (≤ 0.063mm) preferably does not exceed 1%. Further, the road metal should have a good affinity for bitumen and/or emulsion. For bicycle paths, the carrier may also be replaced partly (for example, 30-40% thereof) by olivine.

Particularly suitable for use as base rock in the present invention is a magmatic igneous rock having a microcrystalline structure, preferably microdiorite, such as, for example, microdiorite from Bierghes.

The invention also provides a road surface, preferably a surface or wearing layer on asphalt, comprising a road surfacing composition according to the invention. The road surface is, for example, the road surface of a (car) roadway, bicycle path or bicycle lane.

The road surface is, for example, a roadway, bicycle path or bicycle lane. In a specific embodiment, the road surface is within the built-up area, in which case the composition preferably comprises 30-35% of photocatalyst. In another specific embodiment, the road surface is outside the built-up area, in which case the composition preferably comprises 15-25% of photocatalyst.

Also, the invention relates to the use of a road surfacing composition according to the invention in the maintenance, the repair and/or construction of an asphalt road surface. Thus, the invention provides a method for maintaining, repairing and/or constructing an asphalt road surface, comprising applying a road surfacing composition according to the invention, preferably to at least a part of the asphalt road surface that has been provided beforehand with a bituminous binder. Of relevance with asphalt, but also with the surface treatment and the emulsion asphalt concrete, are the permissible gradings of base rock, olivine and the calcined flint. With surface treatments, usually, the gradings 2/5mm, 4/8mm or 8/11mm are chosen.

In an embodiment, the method comprises applying a layer of binder to the road surface, preferably a binder comprising bitumen, epoxies and/or lignin, followed by chipping with a base rock as carrier, and finally followed by chipping with the road surfacing composition mentioned.

Preferably, the method comprises a surface treatment of an existing asphalt road surface, more preferably applying a surface or wearing layer to new or existing asphalt.

The unique road surfacing composition according to the present invention can be used in a large number of different methods for surface treatment. In an embodiment, this concerns a single surface treatment, in which spraying is done once and immediately after that a layer of road surfacing composition is applied. In another embodiment, an after-chipped surface treatment is involved, in which to the layer of binder sprayed in one go, a thin layer of grit is applied. This layer is after-chipped with a finer road metal and rolled in.

In yet another embodiment, a double surface treatment is involved, consisting of two single surface treatments applied shortly after each other. The first layer with a somewhat coarser size and the second layer having a finer grading. Yet another variant concerns a sandwich construction, whereby onto a road surface an open layer of road metal is chipped, over this layer a layer of binder is sprayed, which is thereupon covered with a road surfacing composition according to the invention.

In a specific embodiment, a method according to the invention involves street furniture or related objects, such as kerbstones, posts, benches, road markings, urinals, etc.

For example, the underlying hardening construction consists of cement concrete, steel, plastic or wood. Accordingly, the invention also provides a road surfacing composition for use on concrete bicycle paths and roads as well as bridges (for example, of steel or wood) and plastic roads yet to be developed.

### EXAMPLE 1 : Recipe for road surfacing composition

Component (i) olivine having a Mohs' value hardness of 6.5 to 7.0, with an s.w. of about 3.3
Component (ii) NOx photocatalyst comprising a mineral grain coated with anatase TiO₂
Component (iii) light reflective road metal comprising calcined flint with a maximum grading of 2/6mm were mixed in proportions by volume of 35% - 35% - 30%, respectively.

### EXAMPLE 2 : Road surface treatment

Inspecting the road surface to be treated beforehand for damages, cracks and/or potholes and repairing these. Cleaning of the substrate using a road surface cleaner. Assuming that the existing asphalt is sufficiently dry and cleaned, a bitumen emulsion, such as Eshalite EM, can be sprayed in a layer thickness of about 1.45 kg/m2, followed by chipping with a carrier base rock such as Microdiorite from Bierghes grading 4/8mm (about 8kg/m2).

This can be done with a method as usual for applying wearing layers, e.g. with a buggy grit spreader. This is followed by chipping of the mixture according to Example 1, about 10 kg/m2, in one pass. The whole is rolled in with a multityred roller. This is referred to herein as an after-chipped surface treatment. In this manner, on the one hand, the civil engineering requirements to be imposed on the road surface are complied with, and on the other hand tyre noise will diminish owing to a proper grading buildup of the whole. The treated road surface can be put into use by traffic practically immediately.

## Claims

1. A road surfacing composition comprising the components
(i) 30-45vol% of olivine;
(ii) 20-35vol% of supported photocatalyst which can convert NOx into nitrate;
(iii) 30-40vol% of light reflective road metal;
based on the sum of the parts by volume of components (i), (ii) and (iii) in the composition, and with the sum of the parts by volume being 100.

2. The composition according to claim 1, wherein the olivine has a hardness of 6.5-7 on Mohs' scale, and a specific weight of 3-3.5 kg/m3.

3. The composition according to claim 1, wherein the light reflective road metal has a hardness of at least 7 on Mohs' scale, and a specific weight in the range of about 1000 - 1200 kg/m3, preferably about 1100kg/m3.

4. The composition according to any one of claims 1-3, wherein the light reflective road metal comprises calcined flint.

5. The composition according to any one of claims 1-3, wherein the light reflective road metal wholly consists of natural light road metal or a mix with calcined flint.

6. The composition according to any one of the preceding claims, wherein the photocatalyst is based on TiO₂, preferably wherein the photocatalyst is a mineral grain which is coated with anatase TiO₂.

7. Use of a composition according to claims 1-6, in combination with a base road metal having a polished stone value of at least 58 (PSV value ≥ 58) and a resistance to crushing (LA value) of ≤ 20.

8. A road surface, preferably a surface or wearing layer on asphalt, comprising a road surfacing composition according to any one of claims 1-6.

9. The road surface according to claim 8, furthermore comprising a road metal having a polished stone value of at least 58 (PSV value ≥ 58) and a resistance to crushing (LA value) of ≤ 20, preferably wherein the road metal is a magmatic igneous rock having a microcrystalline structure, preferably microdiorite from Bierghes.

10. A method for maintaining, repairing and/or constructing an asphalt road surface, comprising applying a road surfacing composition according to any one of claims 1-6.

11. The method according to claim 10, comprising a) applying a layer of binder to the road surface, preferably a binder comprising bitumen, epoxies and/or lignin, b) chipping with road metal having a polished stone value of at least 58 (PSV value ≥ 58) and a resistance to crushing (LA value) of ≤ 20, followed by c) chipping with said road surfacing composition.

12. The method according to claim 10 or 11, comprising a surface treatment of an existing asphalt road surface, preferably comprising applying a surface or wearing layer to new or existing asphalt.

13. The method according to any one of claims 10-12, comprising a single surface treatment, an after-chipped surface treatment, a double surface treatment or a sandwich construction.

14. The road surface or method according to any one of claims 8-13, wherein said road surface is a roadway, bicycle path or bicycle lane.
